# FASCICULE DE BREVET EUROPEEN

(11) **EP 4 222 632 B1**
(45) Date de publication et mention de la délivrance du brevet: **21.08.2024**
(21) Numéro de dépôt: 21798414.5
(22) Date de dépôt: 24.09.2021
(51) Int. Cl.: G06F 21/64, H04J 3/06

(54) **PROCÉDÉ DE SYNCHRONISATION D'UNE PLURALITÉ DE SERVEURS DE COMMUNICATIONS, DISPOSITIFS ET PROGRAMMES D'ORDINATEURS CORRESPONDANTS**
VERFAHREN ZUR SYNCHRONISATION MEHRERER KOMMUNIKATIONSSERVER SOWIE ENTSPRECHENDE COMPUTEREINRICHTUNGEN UND PROGRAMME
METHOD FOR SYNCHRONISING A PLURALITY OF COMMUNICATION SERVERS, AND CORRESPONDING COMPUTER DEVICES AND PROGRAMS

(30) Priorité: 29.09.2020 FR 2009880
(43) Date de publication de la demande: 09.08.2023
(73) Titulaire: Orange, 92130 Issy-les-Moulineaux (FR)
(72) Inventeur: MESSIÉ, Vincent, 92326 Châtillon CEDEX (FR); RADIER, Benoît, 92326 Châtillon CEDEX (FR); BRAUD, Arnaud, 92326 Châtillon CEDEX (FR); FROMENTOUX, Gaël, 92326 Châtillon (FR)
(86) Numéro de dépôt international: PCT/FR2021/051642
(87) Numéro de publication internationale: WO 2022/069818

(56) Documents cités:
- WO-A1-2018/057322
- US-A1- 2014 281 037
- US-B1- 8 392 709
- J-C TOURNIER ET AL: "Strategies to secure the IEEE 1588 protocol in digital substation automation", CRITICAL INFRASTRUCTURES, 2009. CRIS 2009. FOURTH INTERNATIONAL CONFERENCE ON, IEEE, PISCATAWAY, NJ, USA, 27 March 2009 (2009-03-27), pages 1 - 8, XP031472841, ISBN: 978-1-4244-4636-0

## Description

### 1. Domaine technique

L'invention est mise en oeuvre dans un espace virtuel de données, par exemple mis en oeuvre par une pluralité de partenaires, déployé sur une infrastructure de communications. L'invention est relative à la synchronisation temporelle des serveurs de communication intervenant dans l'élaboration et au traitement des données.

### 2. Etat de la technique

Le secteur des télécommunications est au coeur d'une transformation digitale qui s'appuie sur des technologies émergentes telles que la virtualisation des fonctions réseaux (VNF - Virtual Network Functions), consistant à découpler les fonctions réseau des équipements physiques dédiés pour déployer les fonctions réseau dans des espaces de stockage, ou cloud, plus ou moins distribués et en s'appuyant sur des serveurs génériques.

Cette évolution des réseaux de télécommunications s'appuie en outre sur des technologies émergentes notamment basées sur des registres distribués et sur l'enregistrement des données dans ces registres sans qu'il y ait recours à une autorité de certification. Ainsi, les différentes transactions sont enregistrées dans des registres distribués par des fonctions spécifiques, appelés mineurs, ayant suffisamment de capacité pour résoudre une énigme et ainsi obtenir l'autorisation d'effectuer l'enregistrement des transactions dans les registres.

L'échange et le traitement des données au sein de l'espace virtuel de données requièrent un horodatage. En effet, pour classer, pour authentifier ou plus globalement pour respecter un niveau de sécurité pour les données échangées, il est nécessaire qu'une information temporelle soit ajoutée aux données échangées entre les serveurs de communication, aussi appelés connecteurs, d'un espace virtuel de données. Hors, pour que l'information temporelle puisse être exploitée par les différentes entités intervenant dans l'espace virtuel de données, il convient que la fonction d'horodatage des données utilisée par chaque connecteur pour ajouter l'information temporelle aux données s'appuie sur une horloge partagée entre les différents connecteurs. Il est en effet nécessaire que les différents connecteurs utilisent une même référence temporelle pour que les informations d'horodatage ajoutées par chaque connecteur puissent être exploitées par les autres connecteurs ou par d'autres entités de l'espace virtuel de données.

Un connecteur doit donc comprendre une horloge locale pour pouvoir effectivement ajouter une information d'horodatage aux données échangées dans un espace virtuel de données.

Selon les techniques antérieures, l'horloge locale utilisée par chaque connecteur, est par exemple synchronisée sur une horloge externe de meilleure précision, telle qu'un satellite GNSS (Géolocalisation et Navigation par un Système de Satellites) ou bien un serveur de temps. A ce jour, une pluralité de protocole parmi lesquels
- NTP (en anglais Network Time Protocol - IETF RFC5905 -D. Mills et al. - Network Time Protocol version 4 : Protocol and Algorithms Spécification)
- PTP (en anglais Précision Time Protocol - 1588-2008 - IEEE Standard for a Précision Clock Synchronization Protocol for Networked Measurement and Control Systems)
- Timesync - S. Ruffini and B. Giulio. Methods of time synchronisation in communications networks - U.S. Patent No. 9,094,142.28 Jul. 2015

Ces protocoles et techniques utilisées dans les espaces virtuels de données, selon les techniques relevant de l'état de l'art, consistent à utiliser une seule référence temporelle pour tous les connecteurs. D'une part, dans un contexte d'espace virtuel de données où les connecteurs sont possiblement administrés par des entités distinctes, il est possible que diverses sources ou références soient utilisées par les différents connecteurs, ce qui induit que la solution basée sur une référence temporelle unique n'est pas adaptée au contexte d'utilisation dans un espace virtuel de données multi-acteurs. Il est à noter que même dans un espace virtuel de données mono-acteur, il peut être difficile d'un point de vue architectural de se référer à une source temporelle unique. En outre, cette solution n'est pas satisfaisante car si la référence unique est défaillante ou bien compromise, alors la synchronisation par référence unique n'est pas complètement satisfaisante. Par ailleurs, dans le cas d'une attaque ou d'un dysfonctionnement de l'horloge de référence, aussi appelée horloge maître, alors la synchronisation des connecteurs et donc des données échangées entre les connecteurs s'avère au mieux inexacte et au pire inopérante. Il est à noter que dans un cadre multi-acteurs, notamment, il est possible de mettre en oeuvre des mécanismes de sécurité tels que spécifiés dans le document IETF RFC 7384 (T. Mizrahi. - Security Requirements of Time Protocols in Packet Switched Networks) mais ces mécanismes nécessitent la mise en place d'un médiateur à base de tiers de confiance qui peut être coûteux à mettre en oeuvre et qui repose sur une entité de confiance, et qui peut s'avérer complexe à mettre en oeuvre entre différents acteurs. En outre, le recours à une entité de confiance représente une composante critique en termes de sécurité. Le document

WO2018057322 divulgue une méthode de synchronisation des noeuds d'un réseau, dans laquelle pour déterminer si un horodatage reçu est valide, deux nonces sont comparés.

La présente invention a pour objet d'apporter des améliorations par rapport à l'état de la technique.

### 3. Exposé de l'invention

L'invention vient améliorer la situation à l'aide d'un procédé de synchronisation d'une pluralité de serveurs de communication d'un réseau de communications, aptes à s'échanger des données horodatées à l'aide d'une référence temporelle, ledit procédé étant mis en oeuvre par un serveur de la pluralité, appelé serveur primaire, et comprenant :
- Une émission à destination des autres serveurs de communication de la pluralité, dits serveurs secondaires, d'un message d'initialisation comprenant un identifiant du serveur primaire, une donnée résultant de l'exécution d'un algorithme de sélection du serveur primaire parmi les serveurs de la pluralité, une information temporelle d'émission du message d'initialisation,
- Une réception en provenance d'au moins un serveur secondaire d'un message d'acquittement du message d'initialisation émis,
- Une validation d'un défi de synchronisation comprenant la différence entre une référence temporelle d'émission enregistrée et l'information temporelle d'émission du message d'initialisation, l'information temporelle d'émission remplaçant la référence temporelle enregistrée pour l'horodatage des données échangées entre les serveurs de la pluralité après la validation.

La synchronisation par un des serveurs de communication, aussi appelés connecteurs, dans un réseau de communications, tel qu'un espace virtuel de données, est mise en oeuvre suite au processus de sélection d'un serveur, dit serveur primaire, parmi les serveurs du centre de données. En transmettant un message d'initialisation comprenant une donnée résultant de l'exécution d'un algorithme de sélection, les autres serveurs du réseau de communications, aussi appelés serveurs secondaires, peuvent ainsi vérifier que le serveur transmettant le message d'initialisation est bien autorisé à transmettre une information temporelle. En effet, une pluralité de serveurs de l'espace de données exécute l'algorithme de sélection, et un parmi ceux-ci exécute plus rapidement ou est le seul à pouvoir exécuter l'algorithme et devient pour une période donnée le serveur de référence pour la détermination de l'horloge utilisée pour l'horodatage des données échangées entre les différents connecteurs dans le réseau de communications. L'information temporelle d'émission correspondant au moment où le message d'initialisation est effectivement transmis aux autres connecteurs est ensuite utilisée par les autres connecteurs pour vérifier que l'information temporelle peut effectivement être utilisée comme référence de synchronisation. La réception d'un message d'acquittement permet d'une part de vérifier l'identité du connecteur secondaire transmettant le message d'acquittement et d'autre part de déterminer que l'information temporelle d'émission a été validée par le connecteur secondaire. De façon incidente, la non réception d'un tel message en provenance d'un serveur secondaire indique que le serveur secondaire ne valide pas l'information temporelle transmise. La validation et l'enregistrement du défi de synchronisation comprenant l'information temporelle d'émission permet de pouvoir récupérer l'information de synchronisation lors d'une future analyse des données échangées entre les connecteurs. La chronologie des échanges entre les connecteurs ainsi que les périodes de validité de clés de sécurité par exemple sont pertinentes par rapport à une information temporelle qu'il est possible de retrouver dans les données enregistrées. Le procédé permet ainsi de pouvoir mettre en oeuvre une sélection fiable de la référence temporelle dans un espace de données, des connecteurs différents de l'espace de données étant susceptibles de déterminer successivement une information temporelle de référence à utiliser par les autres connecteurs. De façon préférentielle, seuls les serveurs secondaires ayant effectivement transmis un message d'acquittement et le serveur primaire utilise l'information temporelle d'émission comme horloge.

Selon un aspect de l'invention, les étapes du procédé sont réitérées selon un intervalle de temps propre au réseau de communications.

Le procédé de synchronisation peut avantageusement être mis en oeuvre conformément à une valeur fréquentielle donnée. Ainsi, le serveur primaire peut être différent dans le temps améliorant ainsi la fiabilité de la détermination de l'information temporelle utilisée pour la synchronisation des données dans le réseau de communications.

Selon un autre aspect de l'invention, dans le procédé de synchronisation, la donnée résulte de la résolution d'un problème cryptographique.

Le procédé est d'autant plus fiable qu'il est difficile de déterminer la donnée résultant de l'exécution d'un algorithme de sélection du serveur primaire de façon que le serveur résolvant la résolution du problème cryptographique puisse changer dans le temps ou que les risques liés à ce qu'un serveur malveillant transmette une information temporelle à d'autres serveurs soient réduits. La résolution requérant des ressources informatiques et des capacités de calcul, la probabilité pour qu'un unique serveur de communication résolve l'algorithme est moindre.

Selon un autre aspect de l'invention, dans le procédé de synchronisation, la validation du défi de synchronisation est relative au nombre de messages d'acquittements reçus. Parmi la pluralité de serveurs présents dans le réseau de communications, certains serveurs secondaires déterminent que l'information temporelle peut être utilisée ou non, conformément au procédé de détermination mis en oeuvre par les serveurs secondaires. Le serveur primaire peut selon un exemple comparer le nombre de messages d'acquittements reçus par rapport au nombre de serveurs secondaires sollicité pour valider ou non l'information temporelle d'émission et consécutivement, pour enregistrer le défi de synchronisation.

Selon un autre aspect de l'invention, dans le procédé de synchronisation, la validation d'un défi de synchronisation comprend en outre l'au moins un message d'acquittement reçu.

L'enregistrement des messages d'acquittement reçus permet d'identifier les serveurs ayant effectivement validé l'information temporelle d'émission et donc de pouvoir déterminer l'horloge utilisée notamment pour l'horodatage des données émises par les serveurs ayant émis ces messages d'acquittement.

Selon un autre aspect de l'invention, le procédé de synchronisation comprend en outre l'enregistrement d'une caractéristique de récompense du serveur primaire si le nombre de messages d'acquittement reçus est supérieur à un seuil de confiance.

Dans le but d'encourager les serveurs de communication à résoudre l'algorithme de sélection pour être désigné serveur primaire, et pour augmenter les chances qu'une information temporelle d'émission soit effectivement validée, le serveur primaire est récompensé. Par exemple, un serveur primaire ayant émis une information temporelle qui est par la suite effectivement validée par un nombre suffisant de serveurs secondaires, alors ce serveur primaire est récompensé. Cette récompense peut être prise en compte dans l'algorithme de sélection lors des prochaines mises en oeuvre du procédé et/ou l'entité en charge du serveur peut se voir rétribuer en fonction de cette caractéristique de récompense. Le procédé repose sur une confiance et sur une participation des différents serveurs de la pluralité. S'il s'avère que l'information temporelle d'émission n'est pas validée par un nombre suffisant de serveurs secondaires, c'est-à-dire sous un seuil dit de confiance du serveur primaire, alors le serveur primaire est pénalisé. Le seuil de confiance est possiblement pris en compte dans le processus de sélection du serveur primaire dans la pluralité pour améliorer le mécanisme de consensus pour la validation de l'information temporelle d'émission. Selon un autre aspect de l'invention, le procédé de synchronisation comprend en outre l'acquisition préalable de l'information temporelle d'émission auprès d'une source externe.

L'information temporelle d'émission, considérée comme l'horloge de référence pendant une période de temps avant qu'une autre information temporelle d'émission soit proposée par le même serveur primaire ou un autre serveur primaire sélectionné parmi la pluralité, est avantageusement obtenue auprès d'une entité tierce.

Les différents aspects du procédé de synchronisation qui viennent d'être décrits peuvent être mis en oeuvre indépendamment les uns des autres ou en combinaison les uns avec les autres.

L'invention concerne également un procédé de détermination d'une référence temporelle utilisée pour l'horodatage de données échangées entre une pluralité de serveurs de communications d'un réseau de communications, ladite pluralité comprenant un serveur primaire apte à émettre une information temporelle d'émission et au moins un serveur secondaire, ledit procédé étant mis en oeuvre par l'au moins un serveur secondaire, et comprenant :
- une réception en provenance du serveur primaire, d'un message d'initialisation comprenant un identifiant du serveur primaire, une donnée résultant de l'exécution d'un algorithme de sélection du serveur primaire parmi les serveurs de la pluralité, une information temporelle d'émission du message d'initialisation,
- une détermination d'un écart entre une information temporelle de réception calculée à partir de l'information temporelle d'émission reçue et une horloge locale de l'au moins un serveur secondaire,
- une émission d'un message d'acquittement du message d'initialisation reçu en fonction de l'écart déterminé.

Un serveur secondaire intervient dans le procédé de synchronisation en pouvant lui-même devenir serveur primaire et également en analysant l'analyse temporelle reçue par rapport à une horloge, qui peut être une horloge interne ou une horloge reçue d'un serveur tiers. Ainsi, en fonction de l'écart entre la valeur calculée et la valeur de l'horloge, il émet un message d'acquittement ou non et valide ainsi ou non l'information temporelle reçue.

Selon un autre aspect de l'invention, dans le procédé de détermination, l'information temporelle de réception est calculée en fonction du temps de propagation de données entre le serveur primaire et l'au moins un serveur secondaire.

Le calcul peut avantageusement consister à ajouter le temps de propagation des données entre le serveur primaire et le serveur secondaire à l'information temporelle reçue, et la détermination de l'écart consiste alors à soustraire à la valeur calculée une valeur d'horloge. En fonction de cet écart et de la tolérance acceptable par le serveur secondaire, celui-ci transmet ou non un message d'acquittement.

Selon un autre aspect de l'invention, le procédé de détermination comprend en outre une comparaison de l'écart avec une valeur de tolérance, et la mise à jour de l'horloge locale avec l'information temporelle d'émission reçue si l'écart est inférieur à la valeur de tolérance.

Un serveur secondaire peut avoir sa propre tolérance vis-à-vis de l'information temporelle d'émission reçue et si celle-ci s'avère être trop différente de son horloge locale, c'est-à-dire que l'écart entre l'information temporelle d'émission et l'horloge locale est trop important, alors le serveur secondaire peut considérer que l'information temporelle reçue n'est pas valide. En fonction du nombre d'acquittements reçus, un nouveau serveur primaire pourra être élu par l'exécution d'un nouvel algorithme de sélection.

Les différents aspects du procédé de détermination qui viennent d'être décrits peuvent être mis en oeuvre indépendamment les uns des autres ou en combinaison les uns avec les autres.

L'invention concerne également un dispositif de de synchronisation d'une pluralité de serveurs de communication d'un réseau de communications, aptes à s'échanger des données horodatées à l'aide d'une référence temporelle comprenant
- Un émetteur, apte à émettre à destination des autres serveurs de communication de la pluralité, dits serveurs secondaires, d'un message d'initialisation comprenant un identifiant du serveur primaire, une donnée résultant de l'exécution d'un algorithme de sélection du serveur primaire parmi les serveurs de la pluralité, une information temporelle d'émission du message d'initialisation,
- Un récepteur, apte à recevoir en provenance d'au moins un serveur secondaire d'un message d'acquittement du message d'initialisation émis,
- Un enregistreur, apte à valider un défi de synchronisation comprenant la différence entre une référence temporelle d'émission enregistrée et l'information temporelle d'émission du message d'initialisation, l'information temporelle d'émission remplaçant la référence temporelle enregistrée pour l'horodatage des données échangées entre les serveurs de la pluralité après la validation.

Ce dispositif, apte à mettre en oeuvre dans tous ses modes de réalisation le procédé de synchronisation décrit ci-dessus, est destiné à être mis en oeuvre dans un serveur de données, par exemple instancié dans une machine virtuelle ou un conteneur et/ou dans un environnement cloud d'un réseau de données.

L'invention concerne également un dispositif de détermination d'une référence temporelle utilisée pour l'horodatage de données échangées entre une pluralité de serveurs de communications d'un réseau de communications, ladite pluralité comprenant un serveur primaire apte à émettre une information temporelle d'émission et au moins un serveur secondaire comprenant
- Un récepteur, apte à recevoir en provenance du serveur primaire, d'un message d'initialisation comprenant un identifiant du serveur primaire, une donnée résultant de l'exécution d'un algorithme de sélection du serveur primaire parmi les serveurs de la pluralité, une information temporelle d'émission du message d'initialisation,
- Un module de détermination, apte à déterminer un écart entre une information temporelle de réception calculée à partir de l'information temporelle d'émission reçue et une horloge locale de l'au moins un serveur secondaire,
- un émetteur, apte à émettre un message d'acquittement du message d'initialisation reçu en fonction de l'écart déterminé.

Ce dispositif, apte à mettre en oeuvre dans tous ses modes de réalisation le procédé de détermination qui vient d'être décrit, est destiné à être mis en oeuvre dans un serveur de données, par exemple instancié dans une machine virtuelle ou un conteneur et/ou dans un environnement cloud d'un réseau de données.

L'invention concerne aussi un système de synchronisation d'une pluralité de serveurs de communication d'un réseau de communications, aptes à s'échanger des données horodatées à l'aide d'une référence temporelle, ledit système comprenant
- un serveur primaire comprenant un dispositif de synchronisation,
- au moins un serveur secondaire comprenant un dispositif de détermination.

L'invention concerne aussi un programme d'ordinateur comprenant des instructions pour la mise en oeuvre des étapes du procédé de synchronisation qui vient d'être décrit, lorsque ce programme est exécuté par un processeur et un support d'enregistrement lisible par un dispositif de synchronisation sur lequel est enregistré le programme d'ordinateur.

L'invention concerne aussi un programme d'ordinateur comprenant des instructions pour la mise en oeuvre des étapes du procédé de détermination qui vient d'être décrit, lorsque ce programme est exécuté par un processeur et un support d'enregistrement lisible par un dispositif de détermination sur lequel est enregistré le programmes d'ordinateur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple sur un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, le support d'informations peut être un circuit intégré dans lequel les programmes sont incorporés, le circuit étant adapté pour exécuter ou pour être utilisé dans l'exécution des procédés en question.

### 4. Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
La [Fig 1] présente une vue simplifiée d'une infrastructure de communications comprenant un espace virtuel de données dans lequel un procédé de synchronisation et un procédé de détermination sont mis en oeuvre,
La [Fig 2] présente un aperçu du procédé de synchronisations selon un premier mode de réalisation de l'invention,
La [Fig 3] présente un procédé de détermination d'une information temporelle utilisée pour l'horodatage de données échangées entre une pluralité de serveurs de communications d'un réseau de communications selon un deuxième mode de réalisation de l'invention,
La [Fig 4] présente un exemple de structure d'un dispositif de synchronisation selon un autre mode de réalisation de l'invention,
La [Fig 5] présente un exemple de structure d'un dispositif de détermination d'une information temporelle utilisée pour l'horodatage de données échangées entre une pluralité de serveurs de communications d'un réseau de communications selon un autre mode de réalisation de l'invention.

### 5. Description des modes de réalisation

Dans la suite de la description, on présente des modes de réalisation de l'invention dans une infrastructure de communication. Cette infrastructure peut être mise en oeuvre pour acheminer des données de communications à destination de terminaux fixes ou mobiles et l'invention peut être destinée à installer des fonctions virtualisées utilisées pour l'acheminement et/ou le traitement de données de clientèle résidentielle ou d'entreprises.

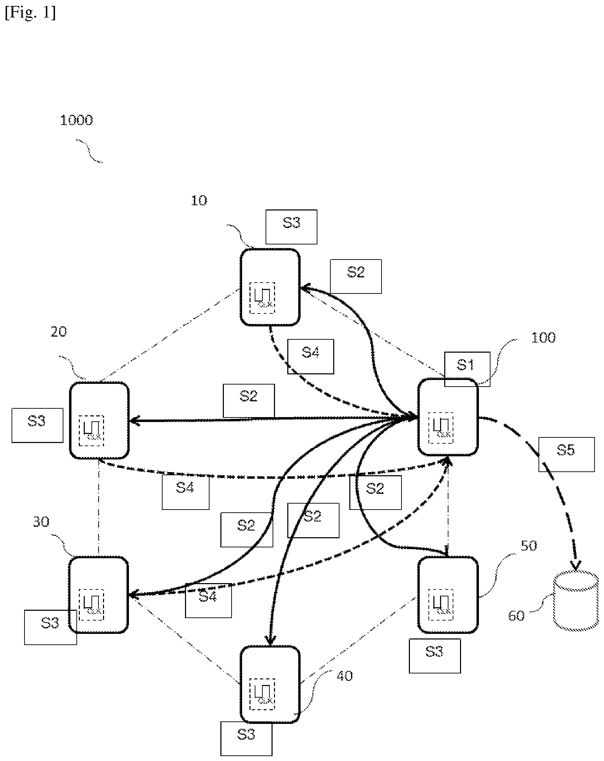

On se réfère tout d'abord à la [Fig 1] qui présente une vue simplifiée d'une infrastructure de communications comprenant un espace virtuel de données dans lequel un procédé de synchronisation et un procédé de détermination sont mis en oeuvre.

Dans cette [Fig 1], un ensemble de connecteurs 10, 20, 30, 40, 50, 100 aussi appelés serveurs de communication sont interconnectés et s'échangent des données dans un espace 1000 virtuel de données (en anglais data-space). Le nombre de connecteurs n'est pas limité et peut également être inférieurs au nombre présenté sur la [Fig 1] à titre d'exemple. L'espace 1000 virtuel de données permet qu'un ensemble d'acteurs (entreprises, opérateurs de réseau, opérateurs d'espace cloud...) s'échangent des données de façon sécurisée dans le but de fournir un service à un client. Chaque serveur de communication gère ses données et décide des données qu'il veut partager avec les autres acteurs participant à l'espace 1000 virtuel de données. L'espace 1000 virtuel de données est déployé sur une infrastructure de communication, fixe et/ou mobile, permettant aux différents serveurs 10, 20, 30, 40, 50, 100 de pouvoir échanger des données. L'échange de données entre les serveurs 10, 20, 30, 40, 50, 100 de communication requiert que les serveurs utilisent une même horloge pour horodater les données échangées entre ces serveurs. Lors d'une première étape, les différents serveurs 10, 20, 30, 40, 50, 100 de communication de l'espace 1000 virtuel de données effectuent une boucle de consensus visant à élire un serveur dit primaire parmi les serveurs 10, 20, 30, 40, 50, 100 de communication. Il est à noter qu'il est possible qu'une partie seulement des serveurs 10, 20, 30, 40, 50, 100 de communication effectuent la boucle de consensus. Cette boucle de consensus correspond, selon ce mode de réalisation, à l'exécution d'un algorithme de sélection d'un serveur parmi les serveurs 10, 20, 30, 40, 50, 100 de communication de l'espace 1000 de données. Selon un exemple, il s'agit par exemple pour chaque serveur 10, 20, 30, 40, 50, 100 de communication de résoudre un problème cryptographique consistant par exemple à trouver une valeur dite « nonce » ou une valeur numérique devant résoudre une équation ou une inéquation. Selon un exemple, le serveur primaire sera celui des serveurs 10, 20, 30, 40, 50, 100 ayant résolu en premier l'algorithme de sélection parmi les serveurs 10, 20, 30, 40, 50, 100 de communication et qui est donc capable de transmettre une donnée résultant de l'exécution de l'algorithme de sélection aux autres serveurs. Selon ce mode de réalisation, le serveur 100 de communication est le premier à résoudre l'algorithme de sélection et transmet donc la donnée résultant de l'exécution de l'algorithme aux autres serveurs 10, 20, 30, 40, 50 de l'espace de données. La donnée résultant pourra par exemple être la valeur « nonce » ou bien la valeur numérique indiquée ci-dessus. Il est à noter que l'envoi de la donnée résultant de l'exécution de l'algorithme de sélection présente l'intérêt, outre le fait d'indiquer aux serveurs 10, 20, 30, 40, 50 qu'une horloge maître sera proposée, d'améliorer le niveau de sécurité de l'espace de données en garantissant que le serveur 100 a bien effectué l'algorithme de sélection. Les serveurs 10, 20, 30, 40, 50 peuvent en effet vérifier la donnée reçue et s'assurer qu'elle résulte bien de l'algorithme que ces serveurs auront eux-mêmes effectué. L'envoi de cette donnée empêche donc l'envoi d'une horloge par un serveur de communication non autorisé ou n'ayant pas résolu l'algorithme de sélection. Sur la [Fig 1], il est indiqué que seul le serveur 100 exécute l'étape S1 correspondant à la boucle de consensus car celle-ci comprend l'élection du serveur 100 comme serveur primaire, lui seul ayant résolu l'algorithme de sélection ou bien parce qu'il a été le premier à résoudre l'algorithme de sélection parmi les serveurs de l'espace de données.

Lors d'une étape S2, le serveur 100 dit primaire émet à destination des serveurs 10, 20, 30, 40, 50 dits serveurs secondaires, d'un message d'initialisation comprenant un identifiant du serveur 100, par exemple une adresse IP, un identifiant FQDN (en anglais Fully Qualified Domain Name) ou tout autre identifiant spécifique ou non à l'espace 1000 de données. Selon un exemple, la signature de la trame peut se faire grâce au protocole ECDSA (en anglais « « Elliptic Curve Digital Signature Algorithm »), également utilisé sur l'implémentation actuelle du Bitcoin. Ce message comprend également le résultat de l'exécution de l'algorithme de sélection, décrit ci-avant, ainsi qu'une information temporelle d'émission du message d'initialisation émis. Selon un exemple, il s'agit de l'information correspondant au moment où le message est effectivement émis. Selon un exemple, le serveur 100 peut utiliser une horloge récupérée auprès d'une source externe pour définir cette information temporelle. Selon un exemple, cette information temporelle peut être formatée selon la définition du protocole PTP, permettant ainsi une précision de l'ordre de la nanoseconde. Le tableau 1, présenté ci-dessous, décrit un exemple d'informations transmises dans le message d'initialisation transmis par le serveur 100. Le « Timestamp émission » correspond à l'information temporelle d'émission décrite ci-dessus.

**Tablean 1: Informations transmises dans le message d'initialisation**

| |
|---|
| Information temporelle d'émission - Format PTP (64 bits) |
| Nonce (résultat de l'algorithme de sélection) - type entier non signé sur 32 bits |
| Signature (identité du serveur 100) - p. ex. ECDSA (taille variable) |

Les serveurs 10, 20, 30, 40, 50 secondaires reçoivent ces messages d'initialisation comprenant les informations indiquées ci-dessus. A la réception de ce message d'initialisation, lors d'une étape S3, À la réception de cette trame, chaque serveur 10, 20, 30, 40, 50 procédera à sa vérification. La première étape de cette vérification concernera la signature du serveur primaire 100, ainsi que la preuve (résultat de l'algorithme de sélection) ; ces deux champs permettant d'attester de la validité du serveur 100.

Lors de cette étape S3, les serveurs 10, 20, 30, 40, 50 secondaires déterminent un écart entre l'information temporelle d'émission reçue dans le message d'initialisation et une horloge locale des serveurs 10, 20, 30, 40, 50 secondaires. Les serveurs 10, 20, 30, 40, 50 secondaires peuvent avoir leur propre horloge locale ou bien récupérer une horloge depuis un serveur distant. Selon un exemple, Ensuite, chaque serveur 10, 20, 30, 40, 50 secondaire impliqué, c'est-à-dire ayant reçu le message d'initialisation, calcule l'heure corrigée, en ajoutant à l'information temporelle d'émission contenue dans le message d'initialisation, le délai de propagation de données entre le serveur 100 et le serveur secondaire considéré. Par exemple, le serveur 10 ajoutera à l'information temporelle d'émission reçue le temps de propagation, qui peut être par exemple obtenu à partir d'un message ICMP (en anglais Internet Control Message Protocol). Cette heure corrigée sera ensuite comparée à l'heure de réception du message d'initialisation évaluée à partir de l'horloge locale du connecteur. Ainsi, le décalage entre les deux heures (l'heure corrigée et l'heure effective de réception) devra rester dans une certaine tolérance. La vérification du temps corrigé est ainsi laissée au libre choix du serveur secondaire, qui se basera sur sa propre politique. Une politique globale pourra être mise en oeuvre au sein de l'espace 1000 de données pour harmoniser les règles de validation des messages d'initialisation entre les serveurs 10, 20, 30, 40, 50 secondaires.

Si le décalage, c'est-à-dire l'écart entre les deux heures, est inférieur à une valeur de tolérance, propre au serveur 10, 20, 30, 40, 50 secondaire ou à l'espace de données 1000, alors le serveur 10, 20, 30, 40, 50 secondaire émet lors d'une étape S4 un message d'acquittement du message d'initialisation reçu. Dans la [Fig 1], seuls les serveurs 10, 20, 30 secondaires émettent un message d'acquittement lors de l'étape S4. Les deux autres serveurs secondaires, à savoir les serveurs 40, 50 n'ont pas émis de message d'acquittement car ils n'ont pas attesté le serveur primaire 100, soit parce qu'ils n'ont pas déchiffré la signature de celui-ci ou bien parce que le résultat de l'algorithme de sélection du serveur 100 n'a pas été validé par ces serveurs 40, 50. Selon une autre option, et de façon alternative ou complémentaires, l'écart entre les heures calculées par ces serveurs 40, 50 est supérieur à une valeur de tolérance et ils ne valident donc pas l'information temporelle d'émission reçue.

Selon une option, les serveurs 10, 20, 30 transmettant un message d'acquittement au message d'initialisation reçu, ils mettent à jour leur horloge locale en utilisant l'information temporelle d'émission qui devient la valeur d'horloge pour les échanges de données entre les serveurs 100, 10, 20, 30. Les autres serveurs secondaires, c'est-à-dire les serveurs 40 et 50 ne mettent pas à jour leur horloge locale puisqu'ils n'émettent pas de messages d'acquittement et ne valident donc pas l'information temporelle d'émission reçue.

Selon un exemple, les messages d'acquittement reçus sont signés par les serveurs 10, 20, 30 secondaires pour authentifier la validité des émetteurs de ces messages d'acquittement.

A la réception des messages d'acquittement en provenance des serveurs 10, 20, 30 secondaires ayant validé le message d'initialisation reçu, le serveur 100 primaire enregistre lors d'une étape S5 un défi de synchronisation dans un registre 60 de données. Ce défi de synchronisation comprend une différence entre l'information temporelle d'émission transmise et l'information temporelle enregistrée. Cette information temporelle enregistrée, selon un exemple, est une information temporelle d'émission précédemment transmise par un des serveurs 10, 20, 30, 40, 50, 100 de l'espace 1000 de données. Ainsi, l'information temporelle d'émission utilisée par des serveurs parmi les serveurs 10, 20, 30, 40, 50, 100 de l'espace 1000 de données est régulièrement mise à jour conformément aux étapes S1, S2, S3, S4, S5 décrites ci-dessus et répliquées de façon répétée, le serveur primaire pouvant changer lors de ces différentes itérations conformément à l'exécution d'un algorithme de sélection qui peut induire un changement de serveur primaire à chaque itération. Le défi de synchronisation enregistré comprend en outre, selon un exemple, le message d'initialisation émis et possiblement les messages d'acquittements reçus en provenance des serveurs 10, 20, 30. Un exemple de défi de synchronisation est présenté dans le Tableau 2 ci-dessous.

**Tableau 2: Informations transmises dans le défi de synchronisation**

| |
|---|
| Information temporelle d'émission - format PTP (64 bits) |
| Écart Information temporelle enregistrée / Information temporelle d'émission-entier signé 32 bits |
| Nonce (résultat de l'algorithme de sélection) - typ. entier non signé 32 bits |
| Signature serveur 100 primaire (taille variable) |
| Signature (acquittement) Serveur 10 (taille variable) |
| Signature (acquittement) Serveur 20 (taille variable) |
| ... |

La mise à jour de l'information temporelle d'émission, qui sera utilisée pour l'horodatage des données échangées à partir du moment où le défi sera enregistré, repose sur la bonne participation de tous les serveurs 10, 20, 30, 40, 50 et leur capacité à renvoyer des acquittements signés. Il est donc préférable que la mise à jour de l'horloge s'exécute dans un environnement sécurisé. Il n'est cependant pas garanti que tous les serveurs de l'espace 1000 virtuel de données contribuent à cette mise à jour. Selon une option, pour que le serveur 100 valide cette nouvelle information temporelle d'émission, il peut considérer le nombre de messages d'acquittement reçus des serveurs 10, 20, 30, 40, 50. En particulier, pour que l'information temporelle d'émission soit validée, c'est-à-dire pour que l'enregistrement du défi sur le registre 60 de données soit accepté, donc transmis au registre 60 de données, il faut que le nombre d'acquittements soit au-delà d'un seuil défini au préalable (par exemple 60% des serveurs de l'espace 1000 de données) ou un nombre fixé. Par exemple, dans la [Fig 1], le serveur 100 primaire ayant reçu 3 acquittements en provenance des 5 serveurs 10, 20, 30, 40, 50 secondaires de l'espace 1000 de données, le serveur 100 primaire peut valider l'information temporelle d'émission transmise dans le message d'initialisation et l'enregistrer dans le registre 60 de données, ce qui n'aurait pas été le cas s'il n'avait reçu que 2 messages d'acquittement alors que le taux minimal d'acquittements reçus était de 60 %. Dans ce dernier cas, l'information temporelle enregistrée aurait continué d'être utilisée pour l'horodatage des données échangées dans l'espace 1000 de données. La validité des signatures des acquittements pourra également être contrôlée par le serveur 100 primaire lors de leur réception.

Selon une option, dans le cas où le nombre (ou le ratio) de messages d'acquittements reçus (par rapport au nombre de serveurs secondaires de l'espace 1000 de données) est supérieur à une valeur (ou à un ratio) dit de confiance, alors le serveur 100 primaire obtient une récompense et cette caractéristique de récompense (monétaire, jeton) est possiblement enregistrée dans le registre 60 de données. Cette rétribution incite ainsi les serveurs 10, 20, 30, 40, 50, 100 à prendre part au procédé de synchronisation. Inversement, dans le cas où le nombre de messages d'acquittements reçus est inférieur à la valeur de confiance ou si le ratio nombre de messages d'acquittements reçus / nombre de serveurs secondaires dans l'espace 1000 de données est inférieur à un ratio de confiance, une pénalité peut être attribuée au serveur 100 primaire.

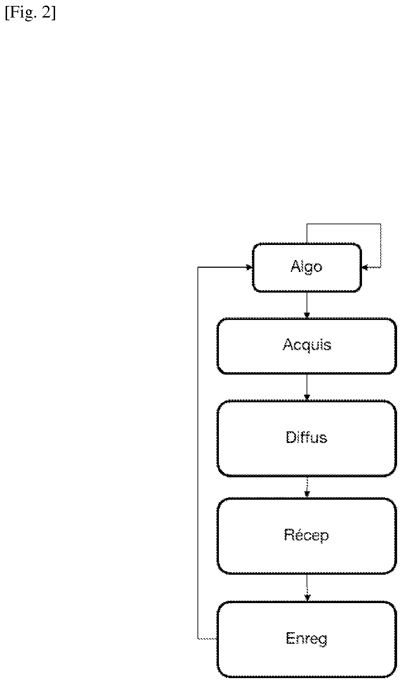

En relation avec la [Fig 2], on présente un aperçu du procédé de synchronisation mis en oeuvre par un serveur (indifféremment appelé connecteur) primaire selon un premier mode de réalisation de l'invention.

L'espace virtuel de données dans lequel sont déployés un serveur (ou connecteur) primaire et au moins un serveur (ou connecteur) secondaire forme une topologie statique et connue de tous (par exemple ils sont interconnectés par le biais d'un réseau filaire). Ainsi, les délais de propagation entre connecteurs sont constants et connus de tous. Les connecteurs possèdent chacun une horloge locale, potentiellement synchronisée à partir d'une référence externe (GNSS, serveur de temps, réseau mobile, ...).

Lors d'une première étape « algo », le connecteur primaire exécute un algorithme de sélection. En fait, le connecteur primaire et l'au moins un connecteur secondaire exécutent cet algorithme mais un seul va être sélectionné pour devenir connecteur primaire. Chaque connecteur intègre ainsi une application certifiée par exemple par une entité de régulation, permettant la synchronisation multi-acteur des connecteurs. L'application intègre tout d'abord une boucle de consensus (algorithme de sélection) exécutée par tous, permettant régulièrement la sélection d'un connecteur primaire, de manière algorithmique. Cette boucle de consensus impliquera des mécanismes cryptographiques permettant de rendre le processus de sélection du connecteur primaire équitable entre les connecteurs, tout en prévenant les attaques de type Byzantines, où de type Déni de Service. L'utilisation d'un tel mécanisme permet de rendre l'architecture résiliente. En effet, n'importe quel connecteur possède ses chances d'être élu. Le mécanisme est ainsi conçu pour que si un connecteur envoie une trame de synchronisation incorrecte, cette dernière pourra simplement être ignorée par les autres, car un autre connecteur primaire sera sélectionné par consensus.

Une fois le connecteur primaire sélectionné, lors d'une étape « Acquis », celui-ci acquiert une horloge par exemple à partir de l'horloge locale indiquée ci-dessus. Cette étape d'acquisition est considérée comme optionnelle puisque le connecteur peut recevoir une horloge indépendamment du fait qu'il devienne connecteur primaire ou non.

Lors d'une étape « Diffus », le connecteur élu comme connecteur primaire diffuse une trame de synchronisation (aussi appelée message d'initialisation) à l'au moins un serveur secondaire de l'espace 1000 de données. Cette trame comprend notamment l'horloge acquise par le connecteur primaire lors de l'étape «Acquis». Cette horloge est destinée à devenir la référence temporelle de l'espace de données jusqu'à ce qu'une nouvelle référence temporelle soit sélectionnée. Ainsi, il est possible de sélectionner à intervalle régulier un « connecteur primaire » chargé de donner une référence temporelle à l'espace de données, au moyen d'une trame de synchronisation comprenant cette référence temporelle, ou horloge, ou information temporelle d'émission.

Lors d'une étape « Récep », le connecteur primaire reçoit les acquittements de l'au moins un connecteur secondaire ayant effectivement accepté et validé la référence temporelle reçue du connecteur primaire. Le nombre de messages d'acquittements reçus indique au connecteur primaire le niveau d'acceptation de la référence temporelle dans l'espace de données.

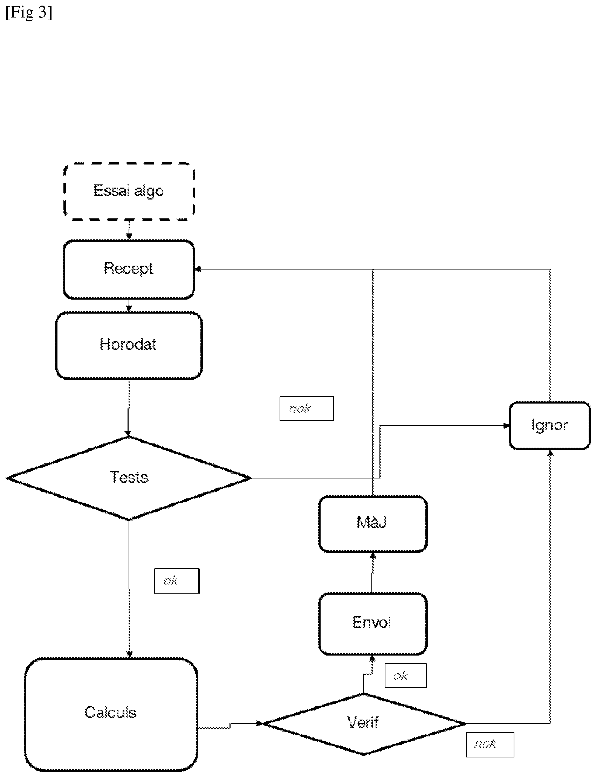

Le connecteur primaire, une fois qu'il a collecté les acquittements ainsi diffusés, enregistre lors d'une étape « Enreg » le résultat du processus de synchronisation mis en oeuvre dans un registre de confiance, au moyen d'une transaction. Cette transaction contiendra la trame de synchronisation complète, possiblement les acquittements collectés ainsi que la différence de temps entre l'ancienne et la nouvelle référence temporelle de l'espace de données, pouvant être codée sur un entier signé de 32 bits. En relation avec la [Fig 3], on présente un aperçu du procédé de détermination d'une information temporelle utilisée pour l'horodatage de données échangées entre une pluralité de serveurs de communications d'un réseau de communications mis en oeuvre par un serveur (indifféremment appelé connecteur) secondaire selon un premier mode de réalisation de l'invention.

Un connecteur secondaire, de façon optionnelle, peut essayer, lors d'une étape « Essai algo », de résoudre l'algorithme de sélection permettant de sélectionner le connecteur primaire. Cette étape est optionnelle car un serveur n'est pas obligé d'essayer de résoudre l'algorithme et, qu'il essaye de le résoudre ou qu'il n'essaye pas, un connecteur est dit secondaire en raison du fait qu'il n'a pas réussi à résoudre l'algorithme, par défaut de tentative ou suite à une non réussite, ou bien parce qu'il n'est pas le premier à résoudre ledit algorithme.

Lors d'une étape « Recept », un connecteur secondaire de l'espace de données mis en oeuvre sur un réseau de communication, reçoit en provenance du connecteur primaire une trame de synchronisation comprenant l'horloge proposée par le connecteur primaire ainsi que la preuve de l'exécution de la boucle de consensus (correspondant à l'algorithme de sélection) et un identifiant du connecteur primaire tel qu'une signature. A la réception de la trame de synchronisation, lors d'une étape « Horodat », le serveur secondaire enregistre l'horloge transmise par le connecteur primaire, cette horloge pouvant être utilisée par le connecteur secondaire s'il la valide lors d'une étape suivante.

Avant de valider cette horloge, lors d'une étape « Tests », le serveur secondaire s'assure que la trame de synchronisation reçue provient effectivement du connecteur primaire en contrôlant l'identifiant compris dans la trame de synchronisation et en vérifiant que celui-ci a bien exécuté avec succès la boucle de consensus. Dans le cas où le test est négatif, c'est-à-dire que l'une et/ou l'autre des informations n'est pas conforme (l'identifiant ne correspond pas à un serveur de l'espace de données et/ou la donnée ne résulte pas de l'exécution de la boucle de consensus), alors il ignore lors d'une étape « Ignor » la trame de synchronisation reçue et ne prend pas en compte les informations présentes dans cette trame.

Lors d'une phase « Calculs », le connecteur secondaire détermine un écart entre l'horloge reçue modifiée pour prendre en compte la durée de transmission de cette horloge locale dans la trame de synchronisation acheminée entre le connecteur primaire et le connecteur secondaire et une horloge locale du serveur secondaire. Ainsi, si H1 représente l'information temporelle d'émission ou l'horloge transmise dans la trame de synchronisation et H2, une horloge locale du serveur secondaire et que le temps de propagation de la trame de synchronisation entre le connecteur primaire et le connecteur secondaire est T1, alors le serveur secondaire calcule H1 + T1. Il est à noter que le serveur secondaire peut utiliser une autre méthode ou un autre calcul pour comparer H1 et H2. Selon une alternative, le serveur secondaire peut également considérer H2 comme valide en comparant H1 et H2 indépendamment du temps de propagation. Ensuite il compare H2 à H1 + T1 lors d'une étape « Verif ». Si lors de cette étape « Verif », le connecteur secondaire détermine que la valeur absolue de H2 - (H1+T1) est inférieure à une valeur de tolérance, alors le serveur secondaire valide l'horloge H1 reçue et transmet lors d'une étape « Envoi », un message d'acquittement de la trame de synchronisation reçue. Si le connecteur secondaire ne prend pas en compte T1, il compare alors les valeurs de H1 et H2. De préférence, il transmet l'acquittement dans un message, de préférence signé, par exemple avec le protocole ECDSA, avec la signature propre au connecteur secondaire, conformément aux exigences techniques d'un espace virtuel de données. Si lors de l'étape « verif », l'écart entre H2 et (H1 + T1) est trop important, alors le connecteur secondaire ignore la trame de synchronisation reçue lors d'une étape « Ignor ».

S'il valide l'horloge reçue, il met alors lors d'une étape « MaJ » sa propre horloge locale avec l'horloge H1, garantissant ainsi que les données qu'il émettra et qu'il recevra à partir de ce moment-là sont horodatées avec l'horloge effectivement proposée par le connecteur primaire. Il est à noter que le connecteur secondaire, selon une option, peut mettre à jour son horloge locale avec l'horloge H1 qu'une fois qu'il a reçu un message de confirmation reçu en provenance du connecteur primaire. Cela permet notamment qu'une nouvelle horloge ne soit utilisée que si le connecteur primaire reçoit suffisamment de messages d'acquittement des serveurs secondaires, garantissant ainsi que cette horloge est utilisée par un nombre suffisant de serveurs de l'espace de données.

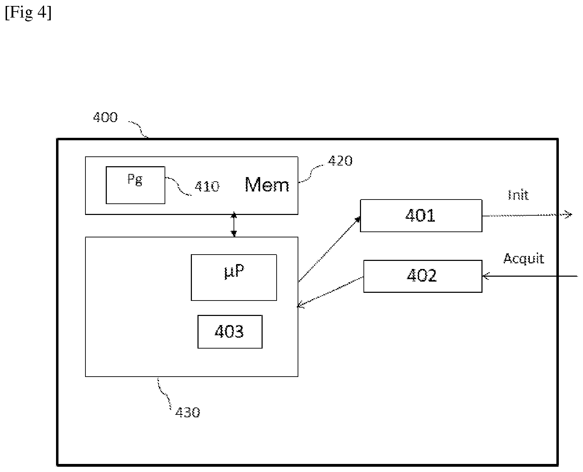

En relation avec la [Fig 4], on présente un exemple de structure d'un dispositif de synchronisation selon un autre mode de réalisation de l'invention.

Le dispositif 400 de synchronisation met en oeuvre le procédé de synchronisation, dont différents modes de réalisation viennent d'être décrits.

Un tel dispositif 400 peut être mis en oeuvre dans un serveur de données, par exemple instancié dans une machine virtuelle ou un conteneur et/ou dans un environnement cloud d'un réseau de données.

Par exemple, le dispositif 400 comprend une unité de traitement 430, équipée par exemple d'un microprocesseur µP, et pilotée par un programme d'ordinateur 410, stocké dans une mémoire 420 et mettant en oeuvre le procédé de détermination selon l'invention. A l'initialisation, les instructions de code du programme d'ordinateur 410 sont par exemple chargées dans une mémoire RAM, avant d'être exécutées par le processeur de l'unité de traitement 430.

Un tel dispositif 400 comprend :
- Un émetteur 401, apte à émettre à destination des autres serveurs de communication de la pluralité, dits serveurs secondaires, d'un message Init d'initialisation comprenant un identifiant du serveur primaire, une donnée résultant de l'exécution d'un algorithme de sélection du serveur primaire parmi les serveurs de la pluralité, une information temporelle d'émission du message d'initialisation,
- Un récepteur 402, apte à recevoir en provenance d'au moins un serveur secondaire d'un message Acquit d'acquittement du message d'initialisation émis,
- Un enregistreur 403, apte à valider un défi de synchronisation comprenant la différence entre une référence temporelle d'émission enregistrée et l'information temporelle d'émission du message d'initialisation, l'information temporelle d'émission remplaçant la référence temporelle enregistrée pour l'horodatage des données échangées entre les serveurs de la pluralité après l'enregistrement.

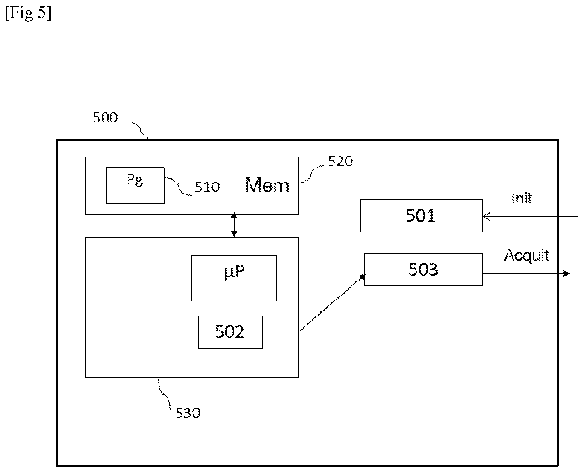

En relation avec la [Fig 5], on présente un exemple de structure d'un dispositif de détermination d'une référence temporelle utilisée pour l'horodatage de données échangées entre une pluralité de serveurs de communications d'un réseau de communications selon un autre mode de réalisation de l'invention.

Le dispositif 500 de détermination met en oeuvre le procédé de détermination d'une information temporelle utilisée pour l'horodatage de données échangées entre une pluralité de serveurs de communications d'un réseau de communications, dont différents modes de réalisation viennent d'être décrits.

Un tel dispositif 500 peut être mis en oeuvre dans un serveur de données, par exemple instancié dans une machine virtuelle ou un conteneur et/ou dans un environnement cloud d'un réseau de données.

Par exemple, le dispositif 500 comprend une unité de traitement 530, équipée par exemple d'un microprocesseur µP, et pilotée par un programme d'ordinateur 510, stocké dans une mémoire 520 et mettant en oeuvre le procédé de taxation selon l'invention. A l'initialisation, les instructions de code du programme d'ordinateur 510 sont par exemple chargées dans une mémoire RAM, avant d'être exécutées par le processeur de l'unité de traitement 530.

Un tel dispositif 500 comprend :
- un récepteur 501, apte à recevoir en provenance du serveur primaire, d'un message Init d'initialisation comprenant un identifiant du serveur primaire, une donnée résultant de l'exécution d'un algorithme de sélection du serveur primaire parmi les serveurs de la pluralité, une information temporelle d'émission du message d'initialisation,
- un module 502 de détermination, apte à déterminer un écart entre une information temporelle de réception calculée à partir de l'information temporelle d'émission reçue et une horloge locale de l'au moins un serveur secondaire,
- un émetteur 503, apte à émettre un message Acquit d'acquittement du message d'initialisation reçu en fonction de l'écart déterminé.

## Revendications

1. Procédé de synchronisation d'une pluralité de serveurs (10, 20, 30, 40, 50, 100) de communication d'un réseau (1000) de communications, aptes à s'échanger des données horodatées à l'aide d'une référence temporelle, ledit procédé étant mis en oeuvre par un serveur (100) de la pluralité, appelé serveur primaire, et comprenant :
- Une émission (S2) à destination des autres serveurs (10, 20, 30, 40, 50) de communication de la pluralité, dits serveurs secondaires, d'un message Init d'initialisation comprenant un identifiant du serveur (100) primaire, une donnée résultant de l'exécution d'un algorithme de sélection (S1) du serveur primaire (100) parmi les serveurs (10, 20, 30, 40, 50, 100) de la pluralité, une information temporelle d'émission du message Init d'initialisation,
- Une réception (S4) en provenance d'au moins un serveur secondaire (10, 20, 30) d'un message Acquit d'acquittement du message d'initialisation émis,
- Une validation (S5) d'un défi de synchronisation comprenant la différence entre une référence temporelle d'émission enregistrée et l'information temporelle d'émission du message d'initialisation, l'information temporelle d'émission remplaçant la référence temporelle enregistrée pour l'horodatage des données échangées entre les serveurs (10, 20, 30, 100) de la pluralité après la validation.

2. Procédé de synchronisation, selon la revendication 1, où les étapes du procédé sont réitérées selon un intervalle de temps propre au réseau de communications.

3. Procédé de synchronisation, selon la revendication 1 ou la revendication 2, où la donnée résulte de la résolution d'un problème cryptographique.

4. Procédé de synchronisation, selon l'une des revendications 1 à 3, où la validation du défi de synchronisation est relative au nombre de messages Acquit d'acquittements reçus.

5. Procédé de synchronisation, selon l'une des revendications 1 à 4, où la validation d'un défi de synchronisation comprend en outre l'au moins un message Acquit d'acquittement reçu.

6. Procédé de synchronisation, selon l'une des revendications 1 à 5, comprenant en outre l'enregistrement d'une caractéristique de récompense du serveur (100) primaire si le nombre de messages Acquit d'acquittement reçus est supérieur à un seuil de confiance.

7. Procédé de synchronisation, selon l'une des revendications 1 à 6, comprenant en outre l'acquisition préalable de l'information temporelle d'émission auprès d'une source externe.

8. Procédé de détermination d'une référence temporelle utilisée pour l'horodatage de données échangées entre une pluralité de serveurs (10, 20, 30, 40, 50, 100) de communications d'un réseau (1000) de communications, ladite pluralité comprenant un serveur (100) primaire apte à émettre une information temporelle d'émission et au moins un serveur (10, 20, 30, 40, 50) secondaire, ledit procédé étant mis en oeuvre par l'au moins un serveur (10, 20, 30, 40, 50) secondaire, et comprenant :
- une réception (S2) en provenance du serveur (100) primaire, d'un message Init d'initialisation comprenant un identifiant du serveur (100) primaire, une donnée résultant de l'exécution d'un algorithme de sélection du serveur (100) primaire parmi les serveurs (10, 20, 30, 40, 50, 100) de la pluralité, une information temporelle d'émission du message Init d'initialisation,
- une détermination (S3) d'un écart entre une information temporelle de réception calculée à partir de l'information temporelle d'émission reçue et une horloge locale de l'au moins un serveur secondaire,
- une émission (S4) à destination du serveur (100) primaire d'un message Acquit d'acquittement du message Init d'initialisation reçu en fonction de l'écart déterminé.

9. Procédé de détermination, selon la revendication 8, où l'information temporelle de réception est calculée en fonction du temps de propagation de données entre le serveur primaire et l'au moins un serveur secondaire.

10. Procédé de détermination, selon la revendication 8 ou la revendication 9, comprenant en outre une comparaison de l'écart avec une valeur de tolérance, et la mise à jour de l'horloge locale avec l'information temporelle d'émission reçue si l'écart est inférieur à la valeur de tolérance.

11. Dispositif (400) de synchronisation d'une pluralité de serveurs (10, 20, 30, 40, 50, 100) de communication d'un réseau (1000) de communications, aptes à s'échanger des données horodatées à l'aide d'une référence temporelle, comprenant
- Un émetteur (401), apte à émettre à destination des autres serveurs de communication de la pluralité, dits serveurs secondaires, d'un message Init d'initialisation comprenant un identifiant du serveur (100) primaire, une donnée résultant de l'exécution d'un algorithme de sélection du serveur primaire parmi les serveurs de la pluralité, une information temporelle d'émission du message d'initialisation,
- Un récepteur (402), apte à recevoir en provenance d'au moins un serveur (10, 20, 30, 40, 50) secondaire d'un message Acquit d'acquittement du message d'initialisation Init émis,
- Un enregistreur (403), apte à valider un défi de synchronisation comprenant la différence entre une référence temporelle d'émission enregistrée et l'information temporelle d'émission du message d'initialisation, l'information temporelle d'émission remplaçant la référence temporelle enregistrée pour l'horodatage des données échangées entre les serveurs (10, 20, 30, 40, 50, 100) de la pluralité après la validation.

12. Dispositif (500) de détermination d'une référence temporelle utilisée pour l'horodatage de données échangées entre une pluralité de serveurs (10, 20, 30, 40, 50, 100) de communications d'un réseau de communications, ladite pluralité comprenant un serveur (100) primaire apte à émettre une information temporelle d'émission et au moins un serveur (10, 20, 30, 40, 50) secondaire, ledit dispositif comprenant :
- Un récepteur (501), apte à recevoir en provenance du serveur (100) primaire, d'un message Init d'initialisation comprenant un identifiant du serveur (100) primaire, une donnée résultant de l'exécution d'un algorithme de sélection du serveur (100) primaire parmi les serveurs (10, 20, 30, 40, 50, 100) de la pluralité, une information temporelle d'émission du message Init d'initialisation,
- Un module (502) de détermination, apte à déterminer un écart entre une information temporelle de réception calculée à partir de l'information temporelle d'émission reçue et une horloge locale de l'au moins un serveur (10, 20, 30, 40, 50) secondaire,
- un émetteur (503), apte à émettre un message Acquit d'acquittement du message Init d'initialisation reçu en fonction de l'écart déterminé.

13. Système de synchronisation d'une pluralité de serveurs (10, 20, 30, 40, 50, 100) de communication d'un réseau (1000) de communications, aptes à s'échanger des données horodatées à l'aide d'une référence temporelle, ledit système comprenant :
- un serveur primaire (100) comprenant un dispositif (400) de synchronisation selon la revendication 11,
- au moins un serveur secondaire (10, 20, 30, 40, 50) comprenant un dispositif (500) de détermination selon la revendication 12.

14. Programme d'ordinateur comportant des instructions pour la mise en oeuvre du procédé de synchronisation selon l'une quelconque des revendications 1 à 7, lorsque le programme est exécuté par un processeur.

15. Programme d'ordinateur comportant des instructions pour la mise en oeuvre du procédé de détermination selon l'une quelconque des revendications 8 à 10, lorsque le programme est exécuté par un processeur.

## Patentansprüche

1. Verfahren zur Synchronisierung einer Mehrzahl von Kommunikationsservern (10, 20, 30, 40, 50, 100) eines Kommunikationsnetzes (1000), die geeignet sind, mithilfe einer Zeitreferenz zeitgestempelte Daten auszutauschen,
wobei das Verfahren von einem Server (100) der Mehrzahl, primärer Server genannt, durchgeführt wird und umfasst:
- Ein Senden (S2), an die anderen Kommunikationsserver (10, 20, 30, 40, 50) der Mehrzahl, sekundäre Server genannt, einer Initialisierungsnachricht Init, die eine Kennung des primären Servers (100), ein aus der Ausführung eines Algorithmus zur Auswahl (S1) des primären Servers (100) unter den Servern (10, 20, 30, 40, 50, 100) der Mehrzahl resultierendes Datenelement, eine Sendezeitinformation der Initialisierungsnachricht Init umfasst,
- Ein Empfangen (S4), von mindestens einem sekundären Server (10, 20, 30), einer Quittierungsnachricht Acquit zur Quittierung der gesendeten Initialisierungsnachricht,
- Eine Validierung (S5) einer Synchronisierungsanforderung, die die Differenz zwischen einer registrierten Sendezeitreferenz und der Sendezeitinformation der Initialisierungsnachricht umfasst, wobei die Sendezeitinformation die registrierte Zeitreferenz zur Zeitstempelung der zwischen den Servern (10, 20, 30, 100) der Mehrzahl ausgetauschten Daten nach der Validierung ersetzt.

2. Verfahren zur Synchronisierung nach Anspruch 1, wobei die Schritte des Verfahrens gemäß einem dem Kommunikationsnetz eigenen Zeitintervall wiederholt werden.

3. Verfahren zur Synchronisierung nach Anspruch 1 oder Anspruch 2, wobei das Datenelement aus der Lösung eines kryptographischen Problems resultiert.

4. Verfahren zur Synchronisierung nach einem der Ansprüche 1 bis 3, wobei die Validierung der Synchronisierungsanforderung sich auf die Anzahl von empfangenen Quittierungsnachrichten Acquit bezieht.

5. Verfahren zur Synchronisierung nach einem der Ansprüche 1 bis 4, wobei die Validierung einer Synchronisierungsanforderung ferner die mindestens eine empfangene Quittierungsnachricht Acquit umfasst.

6. Verfahren zur Synchronisierung nach einem der Ansprüche 1 bis 5, umfassend ferner das Registrieren eines Belohnungsmerkmals des primären Servers (100), wenn die Anzahl empfangener Quittierungsnachrichten Acquit über einem Konfidenzschwellenwert liegt.

7. Verfahren zur Synchronisierung nach einem der Ansprüche 1 bis 6, umfassend ferner das vorherige Erfassen der Sendezeitinformation bei einer externen Quelle.

8. Verfahren zur Bestimmung einer Zeitreferenz, die zur Zeitstempelung von Daten verwendet wird, die zwischen einer Mehrzahl von Kommunikationsservern (10, 20, 30, 40, 50, 100) eines Kommunikationsnetzes (1000) ausgetauscht werden, wobei die Mehrzahl eine primären Server (100), der geeignet ist, eine Sendezeitinformation zu senden, und mindestens einen sekundären Server (10, 20, 30, 40, 50) umfasst, wobei das Verfahren von dem mindestens einen sekundären Server (10, 20, 30, 40, 50) durchgeführt wird und umfasst:
- ein Empfangen (S2), von dem primären Server (100), einer Initialisierungsnachricht Init, die eine Kennung des primären Servers (100), ein aus der Ausführung eines Algorithmus zur Auswahl des primären Servers (100) unter den Servern (10, 20, 30, 40, 50, 100) der Mehrzahl resultierendes Datenelement, eine Sendezeitinformation der Initialisierungsnachricht Init umfasst,
- ein Bestimmen (S3) einer Abweichung zwischen einer Empfangszeitinformation, die ausgehend von der empfangenen Sendezeitinformation berechnet wird, und einer lokalen Uhr des mindestens einen sekundären Servers,
- ein Senden (S4), an den primären Server (100), einer Quittierungsnachricht Acquit zur Quittierung der empfangenen Initialisierungsnachricht Init in Abhängigkeit von der bestimmten Abweichung.

9. Verfahren zur Bestimmung nach Anspruch 8, wobei die Empfangszeitinformation in Abhängigkeit von der Datenlaufzeit zwischen dem primären Server und dem mindestens einen sekundären Server berechnet wird.

10. Verfahren zur Bestimmung nach Anspruch 8 oder Anspruch 9, umfassend ferner ein Vergleichen der Abweichung mit einem Toleranzwert und das Aktualisieren der lokalen Uhr mit der empfangenen Sendezeitinformation, wenn die Abweichung geringer als der Toleranzwert ist.

11. Vorrichtung (400) zur Synchronisierung einer Mehrzahl von Kommunikationsservern (10, 20, 30, 40, 50, 100) eines Kommunikationsnetzes (1000), die geeignet sind, mithilfe einer Zeitreferenz zeitgestempelte Daten auszutauschen, umfassend
- Einen Sender (401), der geeignet ist, an die anderen Kommunikationsserver der Mehrzahl, sekundäre Server genannt, eine Initialisierungsnachricht Init zu senden, die eine Kennung des primären Servers (100), ein aus der Ausführung eines Algorithmus zur Auswahl des primären Servers unter den Servern der Mehrzahl resultierendes Datenelement, eine Sendezeitinformation der Initialisierungsnachricht umfasst,
- Einen Empfänger (402), der geeignet ist, von mindestens einem sekundären Server (10, 20, 30, 40, 50) eine Quittierungsnachricht Acquit zur Quittierung der gesendeten Initialisierungsnachricht Init zu empfangen,
- Eine Registriereinrichtung (403), die geeignet ist, eine Synchronisierungsanforderung zu validieren, die die Differenz zwischen einer registrierten Sendezeitreferenz und der Sendezeitinformation der Initialisierungsnachricht umfasst, wobei die Sendezeitinformation die registrierte Zeitreferenz zur Zeitstempelung der zwischen den Servern (10, 20, 30, 40, 50, 100) der Mehrzahl ausgetauschten Daten nach der Validierung ersetzt.

12. Vorrichtung (500) zur Bestimmung einer Zeitreferenz, die zur Zeitstempelung von Daten verwendet wird, die zwischen einer Mehrzahl von Kommunikationsservern (10, 20, 30, 40, 50, 100) eines Kommunikationsnetzes ausgetauscht werden, wobei die Mehrzahl einen primären Server (100), der geeignet ist, eine Sendezeitinformation zu senden, und mindestens einen sekundären Server (10, 20, 30, 40, 50) umfasst, wobei die Vorrichtung umfasst:
- einen Empfänger (501), der geeignet ist, von dem primären Server (100) eine Initialisierungsnachricht Init zu empfangen, die eine Kennung des primären Servers (100), ein aus der Ausführung eines Algorithmus zur Auswahl des primären Servers (100) unter den Servern (10, 20, 30, 40, 50, 100) der Mehrzahl resultierendes Datenelement, eine Sendezeitinformation der Initialisierungsnachricht Init umfasst,
- ein Modul (502) zur Bestimmung, das geeignet ist, eine Abweichung zwischen einer Empfangszeitinformation, die ausgehend von der empfangenen Sendezeitinformation berechnet wird, und einer lokalen Uhr des mindestens einen sekundären Servers (10, 20, 30, 40, 50) zu bestimmen,
- einen Sender (503), der geeignet ist, eine Quittierungsnachricht Acquit zur Quittierung der empfangenen Initialisierungsnachricht Init in Abhängigkeit von der bestimmten Abweichung zu senden.

13. System zur Synchronisierung einer Mehrzahl von Kommunikationsservern (10, 20, 30, 40, 50, 100) eines Kommunikationsnetzes (1000), die geeignet sind, mithilfe einer Zeitreferenz zeitgestempelte Daten auszutauschen, wobei das System umfasst:
- einen primären Server (100), der eine Vorrichtung (400) zur Synchronisierung nach Anspruch 11 umfasst,
- mindestens einen sekundären Server (10, 20, 30, 40, 50), der eine Vorrichtung (500) zur Bestimmung nach Anspruch 12 umfasst.

14. Computerprogramm, das Anweisungen umfasst, die bei der Ausführung des Programms durch einen Prozessor das Verfahren zur Synchronisierung nach einem der Ansprüche 1 bis 7 durchführen.

15. Computerprogramm, das Anweisungen umfasst, die bei der Ausführung des Programms durch einen Prozessor das Verfahren zur Bestimmung nach einem der Ansprüche 8 bis 10 durchführen.

## Claims

1. Method for synchronizing a plurality of communication servers (10, 20, 30, 40, 50, 100) of a communication network (1000), which servers are capable of exchanging timestamped data using a time reference, said method being implemented by a server (100), called primary server, of the plurality of servers and comprising:
- transmitting (S2) an initialization message Init to the other communication servers (10, 20, 30, 40, 50), called secondary servers, of the plurality of servers, said initialization message comprising an identifier of the primary server (100), a data item resulting from the execution (S1) of an algorithm for selecting the primary server (100) from among the servers (10, 20, 30, 40, 50, 100) of the plurality of servers, an item of transmission time information of the initialization message Init;
- receiving (S4), from at least one secondary server (10, 20, 30), an acknowledgement message Acquit for the transmitted initialization message;
- validating (S5) a synchronization challenge comprising the difference between a recorded transmission time reference and the transmission time information of the initialization message, the transmission time information replacing the recorded time reference for timestamping the data exchanged between the servers (10, 20, 30, 100) of the plurality of servers after the validation.

2. Synchronization method according to Claim 1, wherein the steps of the method are repeated over a time interval specific to the communication network.

3. Synchronization method according to Claim 1 or Claim 2, wherein the data item results from solving a cryptographic problem.

4. Synchronization method according to any of Claims 1 to 3, wherein the validation of the synchronization challenge relates to the number of received acknowledgement messages Acquit.

5. Synchronization method according to any of Claims 1 to 4, wherein the validation of a synchronization challenge further comprises the at least one received acknowledgement message Acquit.

6. Synchronization method according to any of Claims 1 to 5, further comprising recording a reward feature of the primary server (100) if the number of received acknowledgement messages Acquit is greater than a trusted threshold.

7. Synchronization method according to any of Claims 1 to 6, further comprising the prior acquisition of the transmission time information from an external source.

8. Method for determining a time reference used for timestamping data exchanged between a plurality of communication servers (10, 20, 30, 40, 50, 100) of a communication network (1000), said plurality of servers comprising a primary server (100) capable of transmitting an item of transmission time information and at least one secondary server (10, 20, 30, 40, 50), said method being implemented by the at least one secondary server (10, 20, 30, 40, 50), and comprising:
- receiving (S2), from the primary server (100), an initialization message Init comprising an identifier of the primary server (100), a data item resulting from the execution (S1) of an algorithm for selecting the primary server (100) from among the servers (10, 20, 30, 40, 50, 100) of the plurality of servers, an item of transmission time information of the initialization message Init;
- determining (S3) a deviation between an item of reception time information computed from the received transmission time information and a local clock of the at least one secondary server;
- transmitting (S4), to the primary server (100), an acknowledgement message Acquit for the received initialization message Init as a function of the determined deviation.

9. Determination method according to Claim 8, wherein the reception time information is computed as a function of the data propagation time between the primary server and the at least one secondary server.

10. Determination method according to Claim 8 or Claim 9, further comprising comparing the deviation with a tolerance value, and updating the local clock with the received transmission time information if the deviation is below the tolerance value.

11. Device (400) for synchronizing a plurality of communication servers (10, 20, 30, 40, 50, 100) of a communication network (1000), capable of exchanging timestamped data using a time reference, comprising:
- a transmitter (401) capable of transmitting an initialization message Init to the other communication servers, called secondary servers, of the plurality of servers, said initialization message comprising an identifier of the primary server (100), a data item resulting from the execution of an algorithm for selecting the primary server from among the servers of the plurality of servers, an item of transmission time information of the initialization message;
- a receiver (402) capable of receiving, from at least one secondary server (10, 20, 30, 40, 50), an acknowledgement message Acquit for the transmitted initialization message Init;
- a recorder (403) capable of validating a synchronization challenge comprising the difference between a recorded transmission time reference and the transmission time information of the initialization message, the transmission time information replacing the recorded time reference for timestamping the data exchanged between the servers (10, 20, 30, 40, 50, 100) of the plurality of servers after the validation.

12. Device (500) for determining a time reference used for timestamping data exchanged between a plurality of communication servers (10, 20, 30, 40, 50, 100) of a communication network, said plurality comprising a primary server (100) capable of transmitting an item of transmission time information and at least one secondary server (10, 20, 30, 40, 50), said device comprising:
- a receiver (501) capable of receiving, from the primary server (100), an initialization message Init comprising an identifier of the primary server (100), a data item resulting from the execution of an algorithm for selecting the primary server (100) from among the servers (10, 20, 30, 40, 50, 100) of the plurality of servers, an item of transmission time information of the initialization message Init;
- a determination module (502) capable of determining a deviation between an item of reception time information computed from the received transmission time information and a local clock of the at least one secondary server (10, 20, 30, 40, 50);
- a transmitter (503) capable of transmitting an acknowledgement message Acquit for the received initialization message Init as a function of the determined deviation.

13. System for synchronizing a plurality of communication servers (10, 20, 30, 40, 50, 100) of a communication network (1000), capable of exchanging timestamped data using a time reference, said system comprising:
- a primary server (100) comprising a synchronization device (400) according to Claim 11;
- at least one secondary server (10, 20, 30, 40, 50) comprising a determination device (500) according to Claim 12.

14. Computer program comprising instructions for implementing the synchronization method according to any one of Claims 1 to 7, when the program is executed by a processor.

15. Computer program comprising instructions for implementing the determination method according to any one of Claims 8 to 10, when the program is executed by a processor.
